(19) Europäisches Patentamt

European Patent Office

Office européen des brevets

(11) Veröffentlichungsnummer: **0 289 812**
**B1**

(12) **EUROPÄISCHE PATENTSCHRIFT**

(45) Veröffentlichungstag der Patentschrift: **16.01.91**

(21) Anmeldenummer: **88105709.5**

(22) Anmeldetag: **11.04.88**

(51) Int. Cl.⁵: **B 60 H 1/24,** B 60 Q 3/04, G 05 G 1/10

(54) **Luftausströmeinrichtung.**

(30) Priorität: **07.05.87 DE 3715145**

(43) Veröffentlichungstag der Anmeldung:
**09.11.88 Patentblatt 88/45**

(45) Bekanntmachung des Hinweises auf die Patenterteilung:
**16.01.91 Patentblatt 91/03**

(84) Benannte Vertragsstaaten:
**ES FR GB IT NL SE**

(56) Entgegenhaltungen:
**DE-A-2 814 627**
**DE-A-2 930 769**
**US-A-4 392 192**

**PATENT ABSTRACTS OF JAPAN, Band 10, Nr. 349 (M-538)2405r, 26. November 1986; & JP-A-61 149 734 (MATSUSHITA ELECTRIC IND. CO., LTD) 08-07-1986**

(73) Patentinhaber: **Preh-Werke GmbH & Co. KG
Postfach 1740 An der Stadthalle
D-8740 Bad Neustadt/Saale (DE)**

(72) Erfinder: **Bauer, Karl-Heinz
Lerchenstrasse 9
D-8740 Bad Neustadt/Saale (DE)**
Erfinder: **Eckert, Gerold
Am Bersbach 16
D-8740 Bad Neustadt/Saale (DE)**

## Beschreibung

Die Erfindung betrifft eine Luftausströmeinrichtung mit einem vorn offenen Luftausströmschacht, neben dem ein Bedienteil zur Betätigung einer Absperrklappe angeordnet ist, wobei hinter dem Bedienteil eine zu diesem lichtleitende Aufnahmekammer für einen Stecksockel einer Lampe angeordnet ist (siehe DE—A—33 17 807).

Solche Luftausströmeinrichtungen werden in Kraftfahrzeugen eingesetzt. Sie dienen der Luftzuführung zum Fahrzeuginnenraum. Es ist erwünscht, das Bedienteil, das üblicherweise ein Rändelrad ist, zu beleuchten, damit die Einstellung des Bedienteils bzw. der Absperrklappe leicht erkennbar ist. Das Bedienteil selbst ist nach vorn nicht demontierbar.

De DE—A—33 17 807 ist eine Leuchtbandanzeigeanordnung zu entnehmen. Bei dieser ist ein Bedienteil von hinten beleuchtet. Bei einem Ausfall der in einem Stecksockel sitzenden Lampe, kann diese nur von der Rückseite des Aggregats ausgetauscht werden. Dies ist in der Praxis sehr umständlich, so daß oft darauf verzichtet wird, defekte Lampen zu ersetzen.

In der DE—A—35 35 881 ist eine Beleuchtungseinrichtung für eine Frontplatte gezeigt. Hier ist die Lampe hinter einer abnehmbaren Kappe der Frontplatte angeordnet. Die Lampe ist nach Abnehmen der Kappe von vorn austauschbar. Bei Luftausströmeinrichtungen der eingangs genannten Art ist eine derartige Gestaltung nicht möglich, da das Bedienteil nicht nach vorn abnehmbar ist und ein zusätzlicher Platz zur Unterbringung einer abnehmbaren Kappe nicht zur Verfügung steht.

Aufgabe der Erfindung ist es, eine Luftausströmeinrichtung der eingangs genannten Art vorzuschlagen, bei der trotz nicht nach vorn abnehmbaren Bedienteils die hinter diesem angeordnete Lampe von vorn auswechselbar ist.

Erfindungsgemäß ist obige Aufgabe bei einer Luftausströmeinrichtung der eingangs genannten Art dadurch gelöst, daß die Aufnahmekammer eine Durchführungsöffnung zum Luftausströmschacht aufweist, daß am Stecksockel eine Führungsleiste ausgebildet ist, die sich in Betriebsstellung durch die Durchführungsöffnung in den Luftausströmschacht erstreckt und am vorderen Rand des Luftausströmschachtes als Griffteil endet, und daß der Stecksockel mittels der Führungsleiste durch den Luftausströmschacht und die Durchführungsöffnung aus der Aufnahmekammer herausziehbar und in diese einführbar ist.

Die Führungsleiste mit ihrem Griffteil liegt in dem ohnehin nach vorn offenen Luftausströmschacht und läßt sich dort ergreifen. Der Stecksockel mit der Lampe ist dabei nach vorn herausziehbar und von vorn einsetzbar, ohne daß das Beidenteil selbst demontiert werden muß.

Vorteilhafte Ausgestaltungen der Erfindung ergeben sich aus den Unteransprüchen und der folgenden Beschreibung eines Ausführungsbeispiels.

In der Zeichnung zeigen:

Figur 1 eine Teilansicht einer Luftausströmeinrichtung im Bereich ihrer Trennwand zwischen dem Luftausströmschacht und dem Bedienteil,

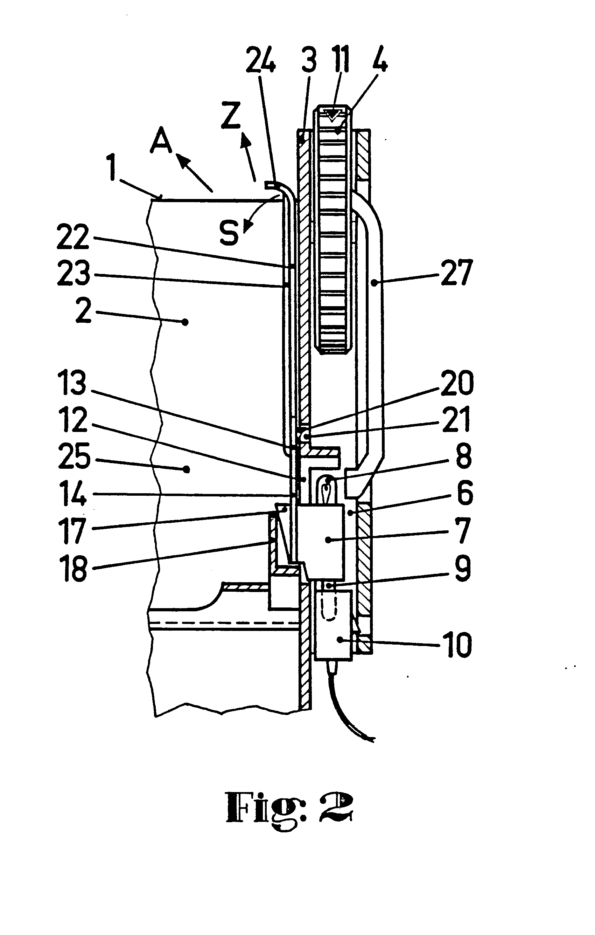

Figur 2 eine Teilansicht längs der Linie II—II nach Figur 1 und

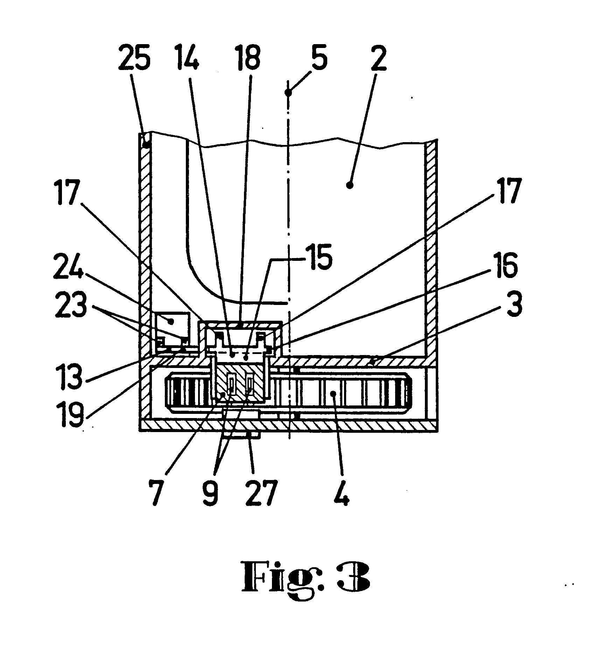

Figur 3 eine Ansicht der Führungsleiste längs der Linie III—III nach Figur 1.

Eine Luftausströmeinrichtung weist einen an der Vorderseite (1) offenen Luftausströmschacht (2) auf. Dieser ist seitlich durch eine Zwischenwand (3) gebrenzt. In dem Luftausströmschacht (2) ist eine nicht näher dargestellte Absperrklappe angeordnet, die mit einem Bedienteil (4), das von einem Rändelrad gebildet ist, zu betätigen ist. Das Bedienteil (4) ist an der Zwischenwand (3) um eine Achse (5) drehbar gelagert und auf der dem Luftausströmschacht (2) abgewandten Seite der Zwischenwand (3) angeordnet.

Hinter dem Bedienteil (4) ist eine Aufnahmekammer (6) für einen Stecksockel (7) ausgebildet, der eine Lampe (8) trägt. Der Stecksockel (7) weist Kontakte (9) auf, die in eine Fassung (10) gesteckt sind. Zwischen der Aufnahmekammer (6) und dem Bedienteil (4) besteht eine nicht näher dargestellte lichtleitende Verbindung, die beispielsweise von Lichtleitern (27), die in einen Hohlraum des Bedienteiles (4) hineinragen, gebildet ist. Dadurch ist das Bedienteil (4) von der Lampe (8) von hinten beleuchtet. Zum Durchtritt des Lichtes ist das Bedienteil (4) mit entsprechenden Fenstern (11) versehen.

Zwischen der Aufnahmekammer (6) und dem Luftausströmschacht (2) ist in der Zwischenwand (3) eine Durchführungsöffnung (12) ausgebildet.

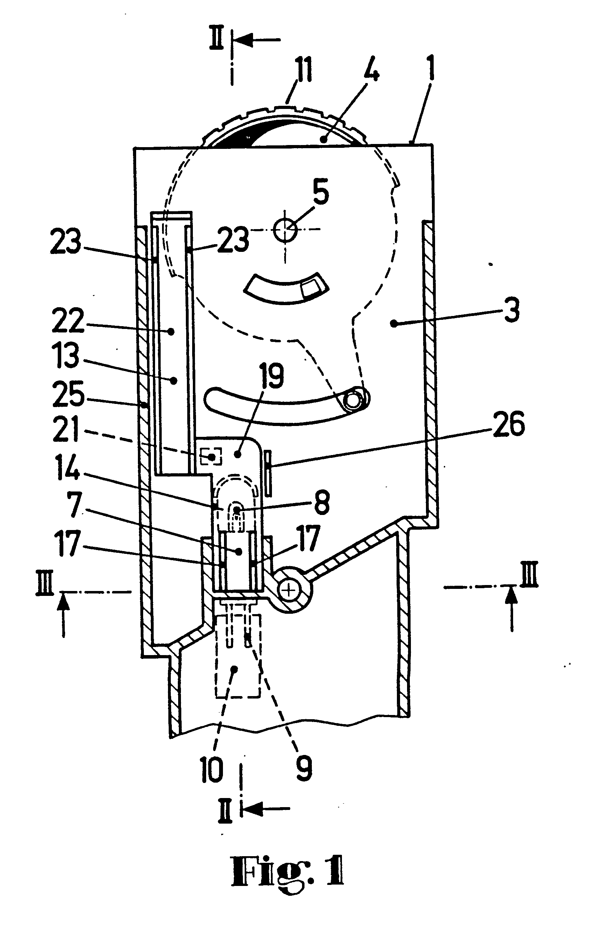

An den Stecksockel (7) ist eine elastische Führungsleiste (13) angeformt. Diese ist doppelt abgewinkelt (vgl. Figur 1). Ihr mit dem Stecksockel (7) verbundener Schenkel (14) ist so gestaltet, daß er in der in den Figuren dargestellten Betriebsstellung die Durchführungsöffnung (12) abdeckt, so daß die Lampe (8) kein Licht in den Luftausströmschacht (2) strahlt. Der Schenkel (14) weist hierzu eine in die Durchführungsöffnung (12) passende Erhöhung (15) und einen die Durchführungsöffnung (12) auf der Seite des Luftausströmschachtes (2) überdeckenden Rand (16) auf.

An dem Schenkel (14) sind Einführschrägen (17) ausgebildet, welche in der Betriebsstellung an einem Wandteil (18) anliegen. Dadurch ist die Führungsleiste (13) gegen die Zwischenwand (3) gedrückt.

An den Schenkel (14) schließt sich ein Querstück (19) an. An diesem ist eine Rastnase (20) ausgebildet, der eine Ausnehmung (21) der Zwischenwand (3) zugeordnet ist. In der Betriebsstellung greift die Rastnase (20) in die Ausnehmung (21), so daß die Führungsleisten (13) fixiert und der Stecksockel (7) in der Fassung (10) gehalten ist.

An das Querstück (19) schließt ein weiterer Schenkel (22) an. Dieser liegt wie das Querstück (19) und der Schenkel (14) auf der dem Bedienteil (4) abgewandten Seite der Zwischenwand (3) im Luftausströmschacht (2). Der weitere Schenkel (22) ist zur Versteifung mit Längsrippen (23) versehen. An seinem der Vorderseite (1) nahen Ende ist an ihm ein Haken (24) als Griffteil ausgebildet.

Der weitere Schenkel (22) der Führungsleiste (13) erstreckt sich dicht neben einer Seitenwand (25) des Luftausströmschachtes (2). Die Seitenwand (25) ist damit gleichzeitig Führung für den Schenkel (22). Als Führung für den Schenkel (14) ist an der Zwischenwand (3) eine Rippe (26) ausgebildet.

Das Griffteil (24) ist so im Luftausströmschacht (2) angeordnet, daß es eine in diesen von vorn eingesetzte Luftleitjalousie nicht stört.

Soll aus der in den Figuren dargestellten Betriebsstellung die Lampe (8) ausgetauscht werden, dann wird am Haken (24) die Führungsleiste (13) in Richtung des Pfeiles (S) verschwenkt, bis die Rastnase (20) aus der Ausnehmung (21) gebracht ist. Anschließend wird am Griffteil (24) in Richtung des Pfeiles (Z) gezogen, wobei sich die Kontakte (9) aus der Fassung (10) lösen. Danach wird dann die Führungsleiste (13) weiter in Richtung des Pfeiles (S) verschwenkt und in Richtung des Pfeiles (A) an der Vorderseite (1) aus dem Luftausströmschacht (2) herausgezogen. Der Stecksockel (7) mit der Lampe (8) gelangt dabei durch die Durchführungsöffnung (12) in den Luftausströmschacht (2) und wird mit der Führungsleiste (13) entnehmbar. Es läßt sich dann die Lampe (8) auswechseln.

Schließlich wird der Stecksockel (7) wieder durch die Durchführungsöffnung (12) in die Aufnahmekammer (6) eingeschoben. Dabei bildet einerseits die Seitenwand (25) eine Führung für den Schenkel (22) und andererseits bildet die Rippe (26) eine Führung für den Schenkel (14). Die Einführschrägen (17) gleiten am Wandteil (18) entlang, bis die Erhöhung (15) in die Durchführungsöffnung (12) greift und die Rastnase (20) in die Ausnehmung (21) schnappt. Der Stecksockel (7) ist mit seinen Kontakten (9) dann wieder rüttelfest in der Fassung (10) gehalten.

Bezugzeichenliste 05/87 Pt.+GM
1 Rand
2 Lufausströmschacht
3 Zwischenwand
4 Bedienteil
5 Achse
6 Aufnahmekammer
7 Stecksockel
8 Lampe
9 Kontakt
10 Fassung
11 Fenster
12 Durchführungsöffnung
13 Führungsleiste
14 Schenkel
15 Erhöhung
16 Rand
17 Einführungsschräge
18 Wandteil
19 Querstück
20 Rastnase
21 Ausnehmung
22 Schenkel
23 Längsrippen
24 Haken (Griffteil)
25 Seitenwand
26 Rippe
27 Lichtleiter
S Schwenkrichtung
Z Zugrichtung
A Zugrichtung

## Patentansprüche

1. Luftausströmeinrichtung mit einem vorn offenen Luftausströmschacht, neben dem ein Bedienteil zur Betätigung einer Absperrklappe angeordnet ist, wobei hinter dem Bedienteil (4) eine zu diesem lichtleitende Aufnahmekammer (6) für einen Stecksockel (7) einer Lampe (8) angeordnet ist, dadurch gekennzeichnet, daß die Aufnahmekammer (6) eine Durchführungsöffnung (12) zum Luftausströmschacht (2) aufweist, daß am Stecksockel (7) eine Führungsleiste (13) ausgebildet ist, die sich in Betriebsstellung durch die Durchführungsöffnung (12) in den Luftausströmschacht (2) erstreckt und am vorderen Rand (1) des Luftausströmschachtes (2) als Griffteil (24) endet, und daß der Stecksockel (7) mittels der Führungsleiste (13) durch den Luftausströmschacht (2) und die Durchführungsöffnung (12) aus der Aufnahmekammer (6) herausziehbar und in diese einführbar ist.

2. Luftausströmeinrichtung nach Anspruch 1, dadurch gekennzeichnet, daß die Führungsleiste (13) in der Betriebsstellung an einer die Durchführungsöffnung (12) aufweisenden Zwischenwand (3) verrastet ist, die zwischen dem Bedienteil (4) und dem Luftausströmschacht (2) verläuft.

3. Luftausströmeinrichtung nach Anspruch 1 oder 2, dadurch gekennzeichnet, daß die Führungsleiste (13) in der Betriebsstellung mittels Einführschrägen (17), die sich an einem Wandteil (18) abstützen, an die Zwischenwand (3) gedrückt ist.

4. Luftausströmeinrichtung nach einem der vorhergehenden Ansprüche, dadurch gekennzeichnet, daß die Führungsleiste (13) elastisch ist.

5. Luftausströmeinrichtung nach einem der vorhergehenden Ansprüche, dadurch gekennzeichnet, daß die Führungsleiste (13) in der Betriebsstellung die Durchführungsöffnung (12) verdeckt.

6. Luftausströmeinrichtung nach einem der vorhergehenden Ansprüche, dadurch gekennzeichnet, daß an der Führungsleiste (13) als Griffteil ein Haken (24) angeformt ist.

7. Luftausströmeinrichtung nach einem der vorhergehenden Ansprüche, dadurch gekennzeichnet, daß die Führungsleiste (13) doppelt abgewinkelt ist, wobei einer der Schenkel (14) der Führungsleiste (13) an dem Stecksockel (7) angeformt ist und in Betriebsstellung die Durchführungsöffnung (12) verdeckt, der weitere Schenkel (22) das Griffteil (24) aufweist und an einem Querstück (19) zwischen den beiden Schenkeln (14, 22) eine Rastnase (20) ausgebildet ist.

8. Luftausströmeinrichtung nach einem der vorhergehenden Ansprüche, dadurch gekennzeichnet, daß eine Seitenwand (25) des Luftausströmschachtes (2) eine Führung für den weiteren Schenkel (22) bildet.

9. Luftausströmeinrichtung nach Anspruch 8, dadurch gekennzeichnet, daß eine Rippe (26) der Zwischenwand (3) eine Führung für den Schenkel (14) der Führungsleiste (13) bildet.

**Revendications**

1. Buse d'aération comprenant un puits de sortie d'air ouvert vers l'avant, à côté duquel est disposé un élément de manoeuvre pour la commande d'un volet de fermeture, tandis qu'est disposée, derrière l'élément (4) de manoeuvre, une chambre (6) logeant un socle (7) à fiches d'une lampe (8), et qui conduit la lumière à cet élément de menoeuvre, buse caractérisée en ce que la chambre (6) de réception présente une ouverture de passage (12) vers le puits (2) de sortie d'air; en ce qu'il est constitué, sur le socle (7) à fiches, une barrette (13) de guidage, qui s'étend, en position de fonctionnement, à travers l'ouverture de passage (12) dans le puits (2) de sortie d'air, et qui s'achève sur le bord avant (1) du puits de sortie d'air (2) par une partie (24) offrant prise; et en ce que le socle (7) à fiches peut être retiré, au moyen de la barrette (13) de guidage à travers le puits (2) de sortie d'air et l'ouverture de passage, hors de la chambre (6) de réception et être introduit dans celle-ci.

2. Buse d'aération selon la revendication 1, caractérisée en ce que la barrette (13) de guidage est, en position de fonctionnement, encrantée sur une cloison intermédiaire (3) présentant l'ouverture de passage (12), qui s'étend entre l'élément (4) de manoeuvre et le puits (2) de sortie d'air.

3. Buse d'aération selon la revendication 1 ou 2, caractérisée en ce que la barrette (13) de guidage est, en position de fonctionnement, poussée contre la cloison intermédiaire (3) au moyen de plans obliques d'introduction (17), qui s'appuient sur une partie de paroi (18).

4. Buse d'aération selon l'une des revendications qui précèdent, caractérisée en ce que la barrette (13) est élastique.

5. Buse d'aération selon l'une quelconque des revendications qui précèdent, caractérisée en ce que la barrette (13) de guidage recouvre, en position de fonctionnement, l'ouverture (12) de passage.

6. Buse d'aération selon l'une des revendications qui précèdent, caractérisée en ce qu'un crochet (24) est façonné comme partie de prise sur la barrette (13) de guidage.

7. Buse d'aération selon l'une des revendications qui précèdent, caractérisée en ce que la barrette (13) de guidage comporte deux coudes, en ce que l'un des montants (14) de la barrette (13) de guidage est façonné sur le socle (7) à fiches et recouvre en position de fonctionnement, l'ouverture de passage (12), tandis que l'autre montant (22) présente la partie de prise (24), et en ce qu'il est constitué un bec (20) d'arrêt sur un élément transversal (19) entre les deux montants (14, 22).

8. Buse d'aération selon l'une des revendications qui précèdent, caractérisée en ce qu'une paroi latérale (25) du puits (2) de sortie d'air constitue un guidage pour l'autre montant (22).

9. Buse d'aération selon la revendication 8, caractérisée en ce qu'une nervure (26) de la cloison intermédiaire (3) constitue un guidage pour le montant (14) de la barrette (13) de guidage.

**Claims**

1. An air outlet device with an air outlet shaft open at the front, next to which there is arranged a control part for activating a throttle valve, wherein behind the operator part (4) and conducting light to it there is arranged a receiving chamber (6) for a socket (7) of a lamp (8), characterised in that the receiving chamber (6) has a lead-in opening (12) to the air outlet shaft (2), in that on the socket (7) there is formed a guide bar (13), which extends in the operational position through the lead-in opening (12) into the air outlet shaft (2) and terminates as a handle part (24) on the front edge (1) of the air outlet shaft (2), and in that the socket (7) is able to be pulled out of and inserted into the receiving chamber (6) and is able to be pulled out, by means of the guide bar (13), through the air outlet shaft (2) and the lead-in opening (12).

2. An air outlet device according to claim 1, characterised in that the guide bar (13) is latched in the operational position on an intermediate wall (3) having the lead-in opening (12), which wall extends between the control part (4) and the air outlet shaft (2).

3. An air outlet device according to claim 1 or 2, characterised in that the guide bar (13) is pressed in the operational position onto the intermediate wall (3) by means of inlet bevels (17), which are supported on the wall part (18).

4. An air outlet device according to one of the preceding claims, characterised in that the guide bar (13) is flexible.

5. An air outlet device according to one of the preceding claims, characterised in that the guide bar (13) masks the lead-in opening (12) in the operational position.

6. An air outlet device according to one of the preceding claims, characterised in that on the guide bar (13) a hook (24) is formed as a handle part.

7. An air outlet device according to one of the preceding claims, characterised in that the guide bar (13) is doubled-angled, wherein one of the limbs (14) of the guide bar (13) is integrally moulded on the socket (7) and in the operational position the lead-in opening (12) is masked, the further limb (22) has the handle part (24) and on the cross piece (19) between both limbs (14, 22) there is formed a latch (20).

8. An air outlet device according to one of the preceding claims, characterised in that a side wall (25) of the air outlet shaft (2) forms a guidance for the further limb (22).

9. An air outlet device according to claim 8, characterised in that a rib (26) of the intermediate wall (3) forms a guidance for the limb (14) of the guide bar (13).

**Fig. 1**

Fig: 2

Fig: 3